(19) Europäisches Patentamt / European Patent Office / Office européen des brevets

(11) EP 2 545 787 B1

(12) **EUROPÄISCHE PATENTSCHRIFT**

(45) Veröffentlichungstag und Bekanntmachung des Hinweises auf die Patenterteilung:
**13.04.2016 Patentblatt 2016/15**

(51) Int Cl.:
***A23L 5/43*** *(2016.01)*

(21) Anmeldenummer: **11005657.9**

(22) Anmeldetag: **11.07.2011**

(54) **Anthocyanhaltige Zusammensetzung**

Compound containing anthocyanin

Composé contenant des anthocyanes

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.01.2013 Patentblatt 2013/03**

(73) Patentinhaber: **Rudolf Wild GmbH & Co. KG**
**69214 Eppelheim (DE)**

(72) Erfinder:
- **Christiansen, Christian**
  **13599 Berlin (DE)**
- **Graf, Anika**
  **10551 Berlin (DE)**

(74) Vertreter: **Grünecker Patent- und Rechtsanwälte PartG mbB**
**Leopoldstraße 4**
**80802 München (DE)**

(56) Entgegenhaltungen:
**WO-A1-2011/065977**
**US-A- 3 909 284**
**US-A1- 2003 082 281**
**US-A1- 2004 121 050**
**US-A1- 2006 003 060**

- **anonymous: "Calcium carbonate", Wikipedia , Retrieved from the Internet: URL:http://en.wikipedia.org/wiki/Calcium_carbonate [retrieved on 2014-08-26]**
- **"Dissociation Constants of Inorganic Acids In Aqueous Solutions" In: "Handbook of Chemistry and Physicss", CRC Press, Cleveland, Ohio 44128, USA page D-130,**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine Zusammensetzung, umfassend mindestens einen Anthocyanextrakt, der zur Herstellung von Lebensmitteln und Halbfertigerzeugnissen von Lebensmitteln geeignet ist.

Es besteht ein großes Interesse daran, Lebensmittel nicht nur geschmacklich sondern auch optisch ansprechend anzubieten. Die Farbe des Lebensmittels stellt in diesem Zusammenhang für den Konsumenten ein wichtiges Auswahlkriterium dar. Lebensmittel, die von Natur aus wenig eigene Farbe besitzen, werden deshalb oft mit Farbstoffen versetzt, um sie für den Konsumenten ansprechend zu gestalten. Weiterhin können Farbstoffe dazu dienen, dass die bei der Herstellung, Verarbeitung oder Lagerung auftretenden Farbveränderungen oder -verluste ausgeglichen werden. Somit ist eine gleichbleibende optische Qualität des Produkts gewährleistet.

Unter den für Lebensmittel üblicherweise verwendeten Farbstoffen kann zwischen synthetischen und natürlichen Farbstoffen unterschieden werden. Zu den wichtigsten synthetischen Lebensmittelfarbstoffen gehören Gelborange S, Chinolingelb, Azorubin, Allurarot, Tartrazin und Chochenillerot. Allerdings stehen diese Farbstoffe unter Verdacht, Aufmerksamkeitsdefizit-Hyperaktivitätsstörung (ADHS) bei Kindern auszulösen. Des Weiteren können diese Farbstoffe Allergien und allergieähnliche Symptome auslösen. Nicht zuletzt stehen die Azofarbstoffe im Verdacht, krebserregend zu sein, weil bei der Verstoffwechselung kanzerogene Arylaminkomponenten freigesetzt werden können. Vor dem Hintergrund dieser Gesundheitsrisiken, der strenger werdenden Lebensmittelvorschriften und des zunehmenden Gesundheitsbewusstseins der Konsumenten geht der Trend immer mehr dahin, natürliche Farbstoffe zu verwenden.

Insbesondere im Hinblick auf die Farben Blau und Grün stellt dies jedoch eine besondere Herausforderung dar. Als natürliche blaue Farbstoffe können z. B. Anthocyane verwendet werden. Anthocyane sind wasserlösliche Pflanzenfarbstoffe, die Blüten und Früchten rote, violette, blaue oder blau-schwarze Färbung verleihen. Die Anthocyane gehören zu den Flavonoiden, einer großen und weit verbreiteten Gruppe der Pflanzeninhaltsstoffe. Anthocyane sind als Lebensmittelzusatzstoff mit der Nummer E163 in der EU ohne Höchstmengenbeschränkung zugelassen.

Die Anthocyane sind mit Zuckern und organischen Säuren derivatisierte Anthocyanidine mit folgender Grundstruktur:

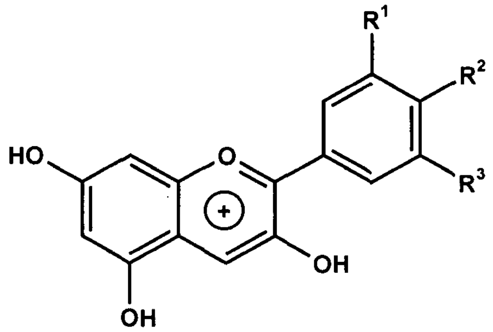

Die am häufigsten vorkommenden Anthocyanidine sind Pelargonidin, Cyanidin, Peonidin, Delphinidin, Petunidin und Malvidin.

| Verbindung | $R^1$ | $R^2$ | $R^3$ |
|---|---|---|---|
| Pelargonidin | H | OH | H |
| Cyanidin | OH | OH | H |
| Peonidin | $OCH_3$ | OH | H |
| Delphinidin | OH | OH | OH |
| Petunidin | $OCH_3$ | OH | OH |
| Malvidin | $OCH_3$ | OH | $OCH_3$ |

Das Farbspektrum der Anthocyane reicht von blau bis rot. Die Farbe der Anthocyane ist jedoch stark pH-Wert abhängig. So liegen Anthocyane bei einem pH-Wert im sauren Bereich üblicherweise rot vor. Eine Blaufärbung wird erst bei einem höheren pH-Wert erreicht. Leider sind Anthocyane bei diesen pH-Werten auf Dauer nicht stabil. In wäßriger Lösung verschwindet die blaue Farbe innerhalb von Stunden bis Tagen, abhängig von der Temperatur und der Wasseraktivität. Selbst sprühgetrocknete Pulver von blauen Anthocyanen verlieren über die Wochen der Lagerung an Farbstärke.

Ein der wichtigsten potentiellen Anwendungen blauer Anthocyane ist die Färbung von Dragee-Coatings. Bei

sehr niedriger Wasseraktivität auf dem Dragee hätten die Anthocyane die Möglichkeit ausreichend lange blau zu bleiben. Leider verfärben sich die Anthocyane in Dragee-Coatings abhängig von Temperatur und Luftfeuchtigkeit innerhalb von Stunden bis Tagen von blau nach violett bis rot-violett zurück. Dabei ist der Zusammenhang zwischen relativer Luftfeuchtigkeit und Temperatur, bei dem eine Verfärbung auftritt, etwa linear. Bei niedrigen Temperaturen verfärben sich die Formulierungen erst bei höherer Luftfeuchtigkeit als bei höheren Temperaturen.

Durch Reaktion von Anthocyanen mit Aluminiumhydroxid können Anthocyan-Aluminium-Farblacke gebildet werden, die eine stabile blaue Farbe besitzen. Bei einem solchen Farbstoff handelt es sich zwar laut Deklaration um einen natürlichen Farbstoff, jedoch sind relativ hohe Gehalte an Aluminium vorhanden. Da Aluminium unter dem Verdacht steht, Alzheimer auszulösen, erfüllt auch ein solcher blauer Farbstoff nicht die Ansprüche der Konsumenten.

Zur Herstellung von grünen Farbstoffen können Chlorophylle (E140), Kupferchlorophylle (E141) und die verseiften Chlorophylline und Kupferchlorophylline verwendet werden. Kupferchlorophylle kommen jedoch nicht natürlich vor, sondern werden durch Umsetzung von Magnesiumchlorophyll mit Kupfersalzen synthetisch hergestellt und erfüllen wiederum nicht die Ansprüche des Verbrauchers. Natürliche Magnesiumchlorophylle und Magnesiumchlorophylline müssen mit synthetischen Emulgatoren wasserlöslich formuliert werden.

Es besteht daher ein Bedürfnis nach einem rein natürlichen blauen oder grünen Farbstoff.

Die Druckschrift WO-A-2011/065977 beschreibt natürliche Farbstoffzusammensetzungen auf Anthocyanbasis. Diese Zusammensetzungen enthalten einen Puffer, ein Anthocyan und eine divalente Ionenquelle. Die erhaltenen anthocyanhaltigen Zusammensetzungen weisen eine blaue Farbe auf und sind als Lebensmittelfarbe geeignet. Allerdings sind die erhaltenen Farbstoffzusammensetzungen nicht stabil, die blaue Farbe verändert sich zurück zu einem rotvioletten Farbton, insbesondere bei Verwendung als Dragee-Coating.

Die Druckschrift US-A-2004/0022904 betrifft Drageekerne, die mit Anthocyanen, deren Farbe durch Zugabe von Natriumhydroxid nach blau verschoben wurde, beschichtet wurden. Es wurde beobachtet, daß die Farbe dieser Dragees 12 Monate bei Raumtemperatur stabil bleibt, wenn die Dragees so verpackt werden, wie sie auch verkauft werden. Leider sind nicht der Kühlkette unterworfene Lebensmittel schwankenden Temperaturen ausgesetzt, so dass sich die relative Luftfeuchtigkeit um die Dragees schnell ändert und eine Verfärbung von Blau nach Rotviolett auftritt.

Die EP-A-1414910 beschreibt einen blauen Lebensmittelfarbstoff auf Anthocyanbasis. In dieser Druckschrift wird das Anthocyan mit einer Aluminiumverbindung zu einem Aluminium-Anthocyan-Farblack umgesetzt. Ein so erhaltener Farbstoff weist jedoch einen relativ hohen Gehalt an Aluminium auf.

Auch die US-A-2006/0003060 beschreibt natürliche blaue und grüne Farbstoffe. Dabei wird ein Rotkohlextrakt mit Natriumhydrogencarbonat und Aluminiumsulfat umgesetzt. Auch dieser Farbstoff ist aluminiumhaltig und erfüllt daher nicht die Ansprüche der Konsumenten.

Die US-A-2004/0121050 betrifft Getränke mit verschiedenen Komponenten, die beim Mischen die Farbe wechseln.

Aufgabe der vorliegenden Erfindung ist es, eine Zusammensetzung zur Verfügung zu stellen, die eine stabile blaue Färbung aufweist.

Diese Aufgabe wird durch eine Zusammensetzung gelöst, die mindestens einen Anthocyanextrakt, mindestens eine Trägersubstanz und mindestens eine Base mit einem $pK_B$-Wert im Bereich von 5 bis 9 umfasst, dadurch gekennzeichnet, dass das Gewichtsverhältnis von Anthocyanextrakt zu Base 1:0,06 bis 1:0,6 beträgt und die Zusammensetzung keine aluminium-haltige Trägersubstanz enthält.

Diese Aufgabe wird auch durch ein Verfahren zur Herstellung der erfindungsgemäßen Zusammensetzung gelöst, das dadurch gekennzeichnet ist, dass die einzelnen Bestandteile in dem gegebenen Verhältnis miteinander vermischt werden.

Die Aufgabe wird ebenfalls durch die Verwendung der erfindungsgemäßen Zusammensetzung zur Färbung von Lebensmittel sowie ein Lebensmittel, umfassend die erfindungsgemäße Zusammensetzung gelöst.

Bevorzugte Ausführungsformen sind in den Unteransprüchen 2 bis 8 und 10 bis 12 beschrieben.

Unter "stabil" bzw. "feuchtigkeitsstabil" wird erfindungsgemäß verstanden, dass die erfindungsgemäße Zusammensetzung über einen Zeitraum von bis zu 12 Monaten bei Lagerung zwischen 10 und 40 °C und 20 bis 95 % relativer Luftfeuchtigkeit keine Farbänderung aufweist.

Unter dem Begriff "Extrakt" wird erfindungsgemäß ein Produkt verstanden, das durch Extraktion mit einem Lösungsmittel, wie z. B. Wasser oder wässrige Lösung von Alkohol, in einer dem Fachmann bekannten Weise, z. B. Mazeration oder Perkolation, erhalten wird.

Unter dem Begriff "Trägersubstanz" wird erfindungsgemäß eine Substanz verstanden, an die andere Substanzen angelagert werden können. Übliche Trägersubstanzen sind Polysaccharide und Hydrokolloide, wie Maltodextrin, Gummi arabicum, Stärke, modifizierte Stärke, Zellulose und modifizierte Zellulose.

Der in der erfindungsgemäßen Zusammensetzung enthaltene Anthocyanextrakt wird aus Pflanzen, die anthocyanhaltig sind, gewonnen. Übliche anthocyanhaltige Pflanzen sind Rotkohl, Süßkartoffeln, schwarze Karotten, Radieschen, Weintrauben, Holunderbeeren, Aroniabeeren, schwarze Johannesbeeren, Hibiscusblüten, Kirschen, Blaubeeren, Himbeeren, Brombeeren schwarzer Reis, blauer Mais und Auberginen.

In einer bevorzugten Ausführungsform in Verbindung mit einer der oben oder unten genannten Ausführungsformen ist der Anthocyanextrakt ein Extrakt aus obigen Rohstoffen oder Gemischen daraus, insbesondere ist er ein Extrakt aus Rotkohl, Süßkartoffel oder schwarzer Karotte oder Gemischen daraus.

Der Anthocyanextrakt weist in einer bevorzugten Ausführungsform in Verbindung mit einer der oben oder unten genannten Ausführungsformen einen Trockensubstanzgehalt von 30 bis 60 Gew.-% auf. Der Trockensubstanzgehalt des Anthocyanextraktes wird bestimmt durch Eintrocknen in einer Mischung mit Seesand bei 103 °C für 16 h und anschließendem Auswiegen in dem Fachmann bekannter Weise.

In einer weiteren bevorzugten Ausführungsform in Verbindung mit einer der oben oder unten genannten Ausführungsformen ist der Anthocyanextrakt ein Trockenextrakt.

Der Anthocyanextrakt besitzt in einer bevorzugten Ausführungsform in Verbindung mit einer der oben oder unten genannten Ausführungsformen einen Brix von 40 bis 70 °Bx. Der Brix ist eine dem Fachmann bekannten Maßeinheit und gibt die lösliche Trockenmasse als Zuckeräquivalent an. Die Bestimmung erfolgt mittels eines Refraktometers in dem Fachmann bekannter Weise.

In einer bevorzugten Ausführungsform in Verbindung mit einer der oben oder unten genannten Ausführungsformen beträgt der Titer des Anthocyanextraktes 1 bis 25 Gew.-% Citronensäure (CS), insbesondere bei 2 bis 10 Gew.-% CS.

Die Acidität des Anthocyanextraktes kann durch Unterschiede im natürlichen Gehalt an Säuren bzw. Phenolen und technologisch bedingtem Zusatz von Citronensäure (CS), Sulfat, Milchsäure oder Äpfelsäure stark variieren. Der Titer der Formulierung ergibt sich durch Titration einer Lösung der Formulierung von Pulver (in g) in entmineralisiertem Wasser mit einer 1 N KOH-Lösung bis pH 8,1, z. B. mit einem Titrino der Fa Metrohm, nach folgender Formel:

$$V[1\ N\ KOH,\ ml] \times 10\ g/EW\ [g] = Titer\ [ml]$$

wobei

V: Verbrauch an 1 N KOH in ml
EW: Einwaage des Anthocyanextrakts in g

Der Titer läßt sich nach folgender Formel in einen formalen Summenparameter Gew.-% Citronensäure (CS) umrechnen

$$Titer\ [ml] \times 0{,}64 = Titer\ [Gew.\text{-}\%\ CS]$$

Ferner besitzt in einer weiteren bevorzugten Ausführungsform in Verbindung mit einer der oben oder unten genannten Ausführungsformen der Anthocyanextrakt einen Farbgehalt von 10 bis 50 Color Units (CU), insbesondere 5 bis 25 CU.

Der Farbgehalt des Anthocyanextrakts wird als Extinktion eines Puffers mit pH 3, enthaltend etwa 1 Gew.-% der Farbformulierung, photometrisch mit einem Farbmessgerät der Firma Dr. Lange (LICO® 400) nach folgendem Verfahren bestimmt:

> In einen 100 ml Messkolben wurden 0,080 bis 0,120 g des Extrakts eingewogen und mit einem Citrat-Puffer mit pH 3, enthaltend 5,75 g wasserfreie Citronensäure und 1,49 g tri-Natriumcitratdihydrat auf 1l entmineralisiertes Wasser, bis zur Marke aufgefüllt und mit einem Magnetrührer gerührt. Anschließend wurde um den Faktor F=2 verdünnt, in dem 25 ml in einen 50 ml Messkolben überführt und dieser mit dem Citrat-Puffer aufgefüllt wurde. Die Extinktion wurde im Dr. Lange Spectro-Photometer Lico 400 bei 520 nm gegen den Puffer gemessen und sollte im linearen Messbereich kleiner 1 liegen, sonst muss die Verdünnung angepasst und F korrigiert werden. Der Farbgehalt wurde nach folgender Gleichung berechnet:

$$CU\ [1\%, 520\ nm, 1\ cm]\ Farbe = (Ext \times F)\ /\ EW\ [g]$$

wobei

CU: Color Units
Ext: Extinktion bei 520 nm

F: Verdünnungsfaktor
EW: Einwaage in g

In einer bevorzugten Ausführungsform in Verbindung mit einer der oben oder unten genannten Ausführungsformen enthält die erfindungsgemäße Zusammensetzung als Trägersubstanz Maltodextrin, Gummi arabicum, Stärke, modifizierte Stärke, Cellulose, modifizierte Cellulose oder Gemische daraus. Besonders bevorzugt sind die Trägersubstanzen Maltodextrin und Gummi arabicum. Die erfindungsgemäße Zusammensetzung enthält in einer bevorzugten Ausführungsform in Verbindung mit einer der oben oder unten genannten Ausführungsformen keine aluminiumhaltige Trägersubstanz, wie z. B. Aluminumhydroxid.

Die erfindungsgemäße Zusammensetzung umfasst des weiteren mindestens eine Base mit einem $pK_B$-Wert im Bereich von 5 bis 9. Der $pK_B$-Wert ist ein Maß für die Basenstärke einer Substanz. Basen mit einem $pK_B$-Wert im Bereich von 5 bis 9 werden üblicherweise als schwache bis mittelstarke Basen bezeichnet. Der $pK_B$-Wert ist eine dem Fachmann bekannte, übliche Größe.

Ist der $pK_B$-Wert der Base geringer als 5, z. B. wird Natriumcarbonat ($pK_B$ = 3,5) als Base eingesetzt, verfärben sich die Anthocyane auf einem Dragee nach Türkis und entfärben sich innerhalb von wenigen Tagen bis Wochen. Ist der $pK_B$-Wert der Base größer als 9, so ist die Base zu schwach und es wird keine blaue Farbe erhalten.

In einer bevorzugten Ausführungsform in Verbindung mit einer der oben oder unten genannten Ausführungsformen ist in der erfindungsgemäßen Zusammensetzung die Base ausgewählt aus Natriumhydrogencarbonat, Kaliumhydrogencarbonat oder Gemischen daraus. Besonders bevorzugt ist die Base Natriumhydrogencarbonat.

Ferner ist in einer bevorzugten Ausführungsform in der erfindungsgemäßen Zusammensetzung das Gewichtsverhältnis von Anthocyanextrakt zu Trägersubstanz 1:0,5 bis 1:3. Enthält die erfindungsgemäße Zusammensetzung Trägersubstanz in dem angegebenen Verhältnis, so ist die Farbe der Zusammensetzung besonders stabil und verändert sich nicht.

In einer bevorzugten Ausführungsform in Verbindung mit einer der oben oder unten genannten Ausführungsformen beträgt das Gewichtsverhältnis von Anthocyanextrakt zu Trägersubstanz besonders bevorzugt 1:0,5 bis 1:2,4, insbesondere 1:1 bis 1:1,5.

Die erfindungsgemäße Zusammensetzung enthält in einer bevorzugten Ausführungsform in Verbindung mit einer der oben oder unten genannten Ausführungsform eine Base in einem Gewichtsverhältnis von Anthocyanextrakt zu Base von 1:0,1 bis 1:0,2. Insbesondere ist das Gewichtsverhältnis von Anthocyanextrakt zu Trägersubstanz 1:1 und das Gewichtsverhältnis von Anthocyanextrakt zu Base 1:0,2.

Je nach Extraktionstechnologie und Grad der Aufreinigung können die Anthocyanextrakte Farbstärken von 5 bis 140 CU und Titer von 1 bis 40 Gew.-% CS, vorzugsweise <22 Gew.-% CS, aufweisen, wobei auch die Anthocyane saure Protonen (Phenole) besitzen, die eine Base neutralisieren können.

Durch Zugabe der Base in die erfindungsgemäße Formulierung werden zunächst alle sauren Bestandteile des Anthocyanextraktes neutralisiert und dann der pH-Wert erhöht. Daher kann die Gesamtmenge der eingesetzten Base in zwei unterschiedliche Bestandteile unterteilt werden, den hier als "gebundenen Base" bezeichneten Anteil, der den Anthocyanextrakt neutralisiert und dem als "freie Base" bezeichneten Anteil, der dem Überschuss an Base entspricht.

Die "freie Base" ergibt sich als Differenz aus der Gesamtmenge an Base und der "gebundenen Base".

$$\text{Freie Base [Gew.-\%]} = \text{Gesamtmenge der Base [Gew.-\%]} - \text{gebundene Base [Gew.-\%]}$$

Der Anteil "gebundene Base", also der für die Neutralisation des Anthoyanextraktes benötigte Anteil Base, lässt sich aus dem Titer der Formulierung unter Berücksichtigung der Wertigkeit der Citronensäure (Citronensäure ist dreiwertig, da sie drei acide Protonen besitzt) und Verwendung der Molmassen von Citronensäure (192 g/mol) und Base berechnen:

$$\text{Titer [Gew.-\% CS] /192 [g/mol]} \times 3 \times \text{Molekulargewicht Base[g/mol]} = \text{gebundene Base [Gew.-\%]}$$

Die erfindungsgemäße Zusammensetzung enthält in einer bevorzugten Ausführungsform in Verbindung mit einer der oben oder unten genannten Ausführungsform die freie Base in einem Gewichtsverhältnis von Anthocyanextrakt zu Gew.-% freier Base von 1:0,03 bis 1:0,5, besonders bevorzugt 1:0,05 bis 1:0,14.

Das Verhältnis der Farbstärke der Formulierung in CU zu Gew.-% freier Base beträgt vorzugsweise 1:0,05 bis 1:1,5, besonders bevorzugt 1:0,1 bis 1:1, insbesondere 1:0,15 bis 1:0,6.

Um einen grünen Farbton zu erhalten, kann die erfindungsgemäße Zusammensetzung in einer bevorzugten Ausführungsform in Verbindung mit einer der oben oder unten genannten Ausführungsformen mindestens einen gelben

Farbstoff enthalten. Übliche gelbe Farbstoffe sind Farbstoffe aus Carotinoiden, insbesondere β-Carotin, Kurkurmin, Extraktkonzentrate aus Safflower und Gardenia jasminoides oder Gemischen daraus enthalten. Besonders bevorzugt enthält die Zusammensetzung Safflowerextraktkonzentrat-Pulver.

Ferner kann die erfindungsgemäße Zusammensetzung in einer bevorzugten Ausführungsform in Verbindung mit einer der oben oder unten genannten Ausführungsformen als weitere Zusatzstoffe Geschmacksstoffe, Aromastoffe, Konservierungsstoffe, wie Kaliumsorbat, Frucht- und Pflanzenextrakte und deren Konzentrate, z. B. aus Carthamus tinctorius Blütenblättern, Gardenia Jasminoides Beeren, Süßungsmittel, Antioxidationsmittel, wie Ascorbinsäure, sowie Kombinationen aus zwei oder mehr Zusatzstoffen enthalten.

Die erfindungsgemäße Zusammensetzung liegt in einer bevorzugten Ausführungsform in Verbindung mit einer der oben oder unten genannten Ausführungsformen in pulverförmiger Form vor. Der Restfeuchtegehalt der erfindungsgemäßen Zusammensetzung beträgt weniger als 8 % Restfeuchte.

In dem erfindungsgemäßen Verfahren werden die einzelnen Bestandteile miteinander vermischt. In einer bevorzugten Ausführungsform in Verbindung mit einer der oben oder unten genannten Ausführungsformen wird der Anthocyanextrakt in flüssiger Form eingesetzt. Besonders bevorzugt wird der flüssige Anthocyanextrakt zunächst mit der Trägersubstanz versetzt, das erhaltene Gemisch getrocknet. Besonders bevorzugt wird das Gemisch sprühgetrocknet und anschließend mit der trockenen Base vermischt. Dabei kann es zweckmäßig sein auch die Base auf die Trägersubstanz zu sprühen, um eine Entmischung des Pulvers aufgrund unterschiedlicher Pulverstruktur zu vermeiden.

In einer weiteren bevorzugten Ausführungsform in Verbindung mit einer der oben oder unten genannten Ausführungsformen wird der Anthocyanextrakt als Trockenextrakt eingesetzt und mit Base und Trägersubstanz vermischt.

Die erfindungsgemäße Zusammensetzung wird zur Herstellung von Lebensmitteln verwendet. Bevorzugt wird die erfindungsgemäße Zusammensetzung zur Herstellung von gefärbten Überzügen für Dragiergut, wie z. B. Schokoladenkerne, Nüsse, Kaugummi und Zuckerperlen verwendet. Zum Überziehen von Dragiergut wird vorzugsweise eine Dragierlösung verwendet, die die erfindungsgemäße Zusammensetzung enthält.

In einer bevorzugten Ausführungsform in Verbindung mit einer der oben oder unten genannten Ausführungsformen enthält die Dragierlösung die erfindungsgemäße Zusammensetzung und Zucker, insbesondere Saccharose.

Vorzugsweise wird die Dragierlösung hergestellt, in dem Pulvermischungen der erfindungsgemäßen Zusammensetzung in Wasser gelöst und dann in heiße Zuckerlösung gegeben werden. Die gefärbte Dragierlösung wird in mehreren Schichten auf Schokoladendragees in dem Fachmann bekannter Weise aufgezogen. Die Dragees werden abschließend mit Canaubawachs und Schell-Lack (Fa Kaul) in dem Fachmann bekannter Weise geglänzt.

Überraschenderweise zeigt die erfindungsgemäße Zusammensetzung eine stabile blaue bzw. grüne Farbe, die sich auch bei Lagerung der Dragees bei 40 bis 100% relativer Luftfeuchtigkeit bei 7 bis 25 °C während 16 Stunden nicht ändert.

Die vorliegende Erfindung wird durch die folgenden Beispiele näher erläutert.

Beispiele

Die folgenden Substanzen wurden in den Beispielen verwendet:

Maltodextrin DE6 der Fa. Roquette, Rotkohl-Extrakt von Diana Vegetal oder Wild Spanien (Rotkohl-Extrakt, flüssig, 43 °Bx, 35% Trockensubstanz, 16 CU (1%, 520 nm, 1 cm, 35 mM Citrat-Puffer pH 3), Titer [1N KOH bis pH 8.1] = 6,5 ml = 4,2 Gew.-% CS) $NaHCO_3$ der Fa. Lohmann, Süßkartoffel-Pulver der Fa. Omya.

11 g der jeweiligen Zusammensetzungen werden in 4 ml Wasser gelöst und in 1 kg heißer Zuckerlösung mit einem Brix von 75 °Bx gegeben. Die gefärbte Dragierlösung wird in 15 Schichten auf Schokoladendragees aufgezogen und die Dragees mit Canaubawachs und Schell-Lack geglänzt.

Die Feuchtestabilität der Farbe auf dem Dragee wird geprüft, indem gefärbte Dragees in einem Schraubdeckelglas zusammen mit einem Bechergläschen gefüllt mit gesättigter Salzlösung (Standardlösungen für definierte Luftfeuchtigkeit) bei drei Temperaturen (7°C, 25°C, 40°C) für 16 h gelagert werden. Als Salze werden verwendet: Kaliumsulfat (97% relative Feuchtigkeit), Kaliumchlorid (85% relative Feuchtigkeit), Natriumchlorid (75% relative Feuchtigkeit), Kaliumcarbonat (43% relative Feuchtigkeit).

<u>Beispiel 1</u>

9 Gew.-% $NaHCO_3$ werden mit 91 Gew.-% Rotkohlextrakt-Pulver mit 12,7 CU (bestehend aus 50 Gew.-% Rotkohl-Extrakt und 50 Gew.-% Maltodextrin DE6) gemischt. Anschließend wurden Dragees mit der Zusammensetzung wie oben beschrieben beschichtet und die Feuchtestabilität nach oben beschriebenen Verfahren getestet.

Die erhaltenen Dragees weisen nach Lagerung unter den oben beschriebenen Bedingungen keine Farbänderung auf.

Beispiel 2

10 Gew.-% $NaHCO_3$ werden mit 90 Gew.-% eines auf Maltodextrin sprühgetrockneten Pulvers eines anthocyanhaltigen Süßkartoffel-Extraktes (bestehend aus 55,6 Gew.-% Süßkartoffelpulver und 44,4 Gew.-% Maltodextrin DE6) mit einer Farbstärke von 14,9 CU vermischt. Anschließend wurden Dragees mit der Zusammensetzung wie oben beschrieben beschichtet und die Feuchtestabilität nach oben beschriebenen Verfahren getestet.
Die erhaltenen Dragees weisen nach Lagerung unter den oben beschriebenen Bedingungen keine Farbänderung auf.

Beispiel 3

3 Gew.-% $NaHCO_3$ werden mit 97 Gew.-% Rotkohlextrakt-Pulver mit 9,1 CU (29,5 Gew.-% Rotkohl-Extrakt und 70,5 Gew.-% Maltodextrin DE6) gemischt. Anschließend wurden Dragees mit der Zusammensetzung wie oben beschrieben beschichtet und die Feuchtestabilität nach oben beschriebenen Verfahren getestet.
Die erhaltenen Dragees weisen nach Lagerung unter den oben beschriebenen Bedingungen keine Farbänderung auf.

Beispiel 4

5,6 Gew.-% $NaHCO_3$ werden mit 94,4 Gew.-% Rotkohlextrakt-Pulver mit 8,3 CU (bestehend aus 29,4 Gew.-% Rotkohl-Extrakt und 70,6 Gew.-% Maltodextrin DE6) gemischt. Anschließend wurden Dragees mit der Zusammensetzung wie oben beschrieben beschichtet und die Feuchtestabilität nach oben beschriebenen Verfahren getestet.
Die erhaltenen Dragees weisen nach Lagerung unter den oben beschriebenen Bedingungen keine Farbänderung auf.

Vergleichsbeispiel 1

33,5 g Maltodextrin DE6 und 16,5 g Rotkohlextrakt werden in 50 g Wasser gelöst und der pH mit Natronlauge auf pH 8 eingestellt und die Lösung sofort sprühgetrocknet. Anschließend wurden Dragees mit der Zusammensetzung wie oben beschrieben beschichtet und die Feuchtestabilität nach oben beschriebenen Verfahren getestet.
Die erhaltenen Dragees sind nicht feuchtestabil, die Farbe verändert sich von blau zu rotviolett.

## Patentansprüche

**1.** Zusammensetzung, umfassend

a) mindestens einen Anthocyanextrakt,
b) mindestens eine Trägersubstanz und
c) mindestens eine Base mit einem $pK_B$-Wert im Bereich von 5 bis 9,

**dadurch gekennzeichnet, dass** das Gewichtsverhältnis von Anthocyanextrakt zu Base 1:0,06 bis 1:0,6 beträgt und die Zusammensetzung keine aluminiumhaltige Trägersubstanz enthält.

**2.** Zusammensetzung nach Anspruch 1, **dadurch gekennzeichnet, dass** der Anthocyanextrakt ein Extrakt aus Rotkohl, Süßkartoffel, schwarzer Karotte oder Gemischen daraus ist.

**3.** Zusammensetzung nach einem der Ansprüche 1 oder 2, **dadurch gekennzeichnet, dass** der Anthocyanextrakt ein Trockenextrakt ist.

**4.** Zusammensetzung nach einem der Ansprüche 1 bis 3, **dadurch gekennzeichnet, dass** die Trägersubstanz ausgewählt ist aus Maltodextrin, Gummi arabicum, modifizierter Stärke, modifizierter Cellulose oder Gemischen daraus.

**5.** Zusammensetzung nach einem der Ansprüche 1 bis 4, **dadurch gekennzeichnet, dass** die Base ausgewählt ist aus Natriumhydrogencarbonat, Kaliumhydrogencarbonat oder Gemischen daraus.

**6.** Zusammensetzung nach einem der Ansprüche 1 bis 5, **dadurch gekennzeichnet, dass** das Gewichtsverhältnis von Anthocyanextrakt zu Trägersubstanz 1:0,5 bis 1:3 beträgt.

7. Zusammensetzung nach einem der Ansprüche 1 bis 6, **dadurch gekennzeichnet, dass** sie weiterhin mindestens einen gelben Farbstoff enthält.

8. Zusammensetzung nach einem der Ansprüche 1 bis 7, **dadurch gekennzeichnet, dass** das Gewichtsverhältnis von Anthocyan zu freier Base 1:0,03 bis 1:0,5 beträgt.

9. Verfahren zur Herstellung der Zusammensetzung nach einem der Ansprüche 1 bis 8, **dadurch gekennzeichnet, dass** die einzelnen Bestandteile miteinander vermischt werden.

10. Verfahren nach Anspruch 9, **dadurch gekennzeichnet, dass** der Anthocyanextrakt in flüssiger Form eingesetzt wird.

11. Verfahren nach Anspruch 10, **dadurch gekennzeichnet, dass** der flüssige Anthocyanextrakt zunächst mit der Trägersubstanz versetzt wird, das erhaltene Gemisch getrocknet und anschließend die Base zugegeben wird.

12. Verfahren nach Anspruch 9, **dadurch gekennzeichnet, dass** der Anthocyanextrakt als Trockenextrakt eingesetzt wird.

13. Verwendung der Zusammensetzung nach einem der Ansprüche 1 bis 8, zur Färbung von Lebensmitteln.

14. Lebensmittel, umfassend die Zusammensetzung nach mindestens einem der Ansprüche 1 bis 8.

**Claims**

1. Composition comprising

   (a) at least one anthocyanin extract,
   (b) at least one carrier substance, and
   (c) at least one base with a $pK_b$ value in the range of 5 to 9,

   **characterized in that** the weight ratio of anthocyanin extract to base is 1 : 0.06 to 1 : 0.6 and the composition does not contain an aluminum containing carrier substance.

2. Composition according to claim 1, **characterized in that** the anthocyanin extract is an extract from red cabbage, sweet potato, black carrot or mixtures thereof.

3. Composition according to claim 1 or 2, **characterized in that** the anthocyanin extract is a dry extract.

4. Composition according to any one of claims 1 to 3, **characterized in that** the carrier substance is selected from maltodextrin, gum arabic, modified starch, modified cellulose or mixtures thereof.

5. Composition according to any one of claims 1 to 4, **characterized in that** the base is selected from sodium bicarbonate, potassium bicarbonate or mixtures thereof.

6. Composition according to any one of claims 1 to 5, **characterized in that** the weight ratio of anthocyanin extract to carrier substance is 1 : 0.5 to 1 : 3.

7. Composition according to any one of claims 1 to 6, **characterized in that** the composition further contains at least one yellow colorant.

8. Composition according to any one of claims 1 to 7, **characterized in that** the weight ratio of anthocyanin to free base is 1 : 0.03 to 1 : 0.5.

9. Process for the preparation of the composition according to any one of claims 1 to 8, **characterized in that** the individual components are mixed with each other.

10. Process according to claim 9, **characterized in that** the anthocyanin extract is used in liquid form.

11. Process according to claim 10, **characterized in that** the liquid anthocyanin extract is first mixed with a carrier substance, the obtained mixture is dried and afterwards the base is added.

12. Process according to claim 9, **characterized in that** the anthocyanin extract is used as dry extract.

13. Use of the composition according to any one of claims 1 to 8 for coloring of foodstuff.

14. Foodstuff comprising the composition according to any one of claims 1 to 8.

**Revendications**

1. Composition contenant:

   a) au moins un extrait d'anthocyane,
   b) au moins une substance formant support et
   c) au moins une base présentant un pKa situé dans la plage de 5 à 9,

   **caractérisée en ce que**, le rapport en poids de l'extrait d'anthocyane à la base est compris entre 1:0,06 à 1:0,6 et que la composition ne contient pas de substance formant support à base d'aluminium.

2. Composition selon la revendication 1, **caractérisée en ce que**, l'extrait d'anthocyane est un extrait de chou rouge, de patate douce, de carotte noire ou de mélanges de ceux-ci.

3. Composition selon l'une quelconque des revendications 1 ou 2, **caractérisée en ce que**, l'extrait d'anthocyane est un extrait sec.

4. Composition selon l'une quelconque des revendications 1 à 3, **caractérisée en ce que**, la substance formant support est sélectionnée parmi la maltodextrine, la gomme arabique, l'amidon modifié, la cellulose modifiée ou les mélanges de ceux-ci.

5. Composition selon l'une quelconque des revendications 1 à 4, **caractérisée en ce que**, la base est sélectionnée parmi l'hydrogénocarbonate de sodium, l'hydrogénocarbonate de potassium ou les mélanges de ceux-ci.

6. Composition selon l'une quelconque des revendications 1 à 5, **caractérisée en ce que** le rapport en poids de l'extrait d'anthocyane à la substance formant support est de 1:0,5 à 1:3.

7. Composition selon l'une quelconque des revendications 1 à 6, **caractérisée en ce qu'**elle comprend en outre au moins un colorant jaune.

8. Composition selon l'une quelconque des revendications 1 à 7. **caractérisée en ce que** le rapport en poids de l'anthocyane à la base libre est de 1:0,03 à 1:0,5.

9. Procédé de production de la composition selon l'une quelconque des revendications 1 à 8 **caractérisé en ce que** l'on mélange ses composants individuels entre eux.

10. Procédé selon la revendication 9, **caractérisé en ce que** l'extrait d'anthocyane est utilisé sous une forme liquide.

11. Procédé selon la revendication 10, **caractérisé en ce que**, l'extrait liquide d'anthocyane est d'abord mélangé à la substance formant support, le mélange obtenu est séché et que la base est ensuite ajoutée.

12. Procédé selon la revendication 9, **caractérisé en ce que** l'extrait d'anthocyane est utilisé sous la forme d'un extrait sec.

13. Utilisation de la composition selon l'une quelconque des revendications 1 à 8 comme colorant alimentaire.

14. Aliment comprenant la composition selon au moins l'une des revendications 1 à 8.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011065977 A
- US 20040022904 A
- EP 1414910 A
- US 20060003060 A
- US 20040121050 A